# EUROPÄISCHE PATENTANMELDUNG

(11) **EP 2 136 138 A2**
(43) Veröffentlichungstag der Anmeldung: **23.12.2009**
(21) Anmeldenummer: 09007917.9
(22) Anmeldetag: 17.06.2009
(51) Int. Cl.: F23G 5/30, F23G 7/10

(54) **Sudhausanlage mit Filtrationseinrichtung und Verfahren zur thermischen Verwertung von feuchten Filtrationspartikeln**

(30) Priorität: 18.06.2008 DE 102008028600
(71) Anmelder: GEA BREWERY SYSTEMS GMBH, 97318 Kitzingen (DE)
(72) Erfinder: Scheller, Ludwig, 56729 Ettringen (DE); Michel, Rudolf, 96049 Bamberg (DE)
(74) Vertreter: Böck, Bernhard

(57) **Zusammenfassung**

Die Erfindung betrifft eine Sudhausanlage (12, 31, 35, 36, 37, 42) mit einer Filtrationseinrichtung, insbesondere mit einem Läuterbottich oder einem Maischefilter, wobei in der Filtrationseinrichtung die in der Maische enthaltenen Partikel von der Würze getrennt werden, und mit einer Feststoffverbrennungseinrichtung (01), wobei die feuchten Filtrationspartikel mit einer Partikelzuführeinrichtung (07) und Verbrennungsluft (05) mit einer Luftzufuhreinrichtung (03, 04) in eine Brennkammer (02) der Feststoffverbrennungseinrichtung (01) zugeführt werden, und wobei die Filtrationspartikel durch Verbrennen in der Feststoffverbrennungseinrichtung (01) thermisch verwertet werden, wobei die Feststoffverbrennungseinrichtung (01) eine primäre Luftzufuhreinrichtung (03, 04) aufweist, mit der die Verbrennungsluft (05) unter Bildung einer stationären Luftströmungszone (06) in die Brennkammer eingefördert werden kann, und wobei mit der Partikelzuführeinrichtung (07) die Filtrationspartikel in die turbulente Luftströmung der stationären Luftströmungszone (06) in der Brennkammer (02) eingefördert werden kann, und wobei durch Vermischung der Filtrationspartikel mit der Verbrennungsluft (05) eine stationäre Luft-Partikel-Strömungszone gebildet wird, und wobei die Filtrationspartikel durch thermische Reaktion in der Luft-Partikel-Strömungzone verbrannt werden.

## Beschreibung

Die Erfindung betrifft eine Sudhausanlage mit einer Filtrationseinrichtung, wie sie beispielsweise bei der Bierherstellung eingesetzt wird, nach dem Oberbegriff des Anspruchs 1. Weiter betrifft die Erfindung ein Verfahren zur thermischen Verwertung von feuchten Filtrationspartikeln, wie sie in einer entsprechenden Sudhausanlage anfallen.

Gattungsgemäße Sudhausanlagen werden bei der Herstellung von alkoholischen Getränken, insbesondere bei der Bierherstellung, eingesetzt. Gemeinsam ist den Sudhausanlagen dabei, dass das jeweils zur Alkoholgewinnung verwendete vermälzte oder unvermälzte Getreide eingemaischt und dadurch ausgesüßt wird. Der ausgesüßte Zucker gelangt dabei in die flüssige Würze und kann später zu Alkohol umgesetzt werden. Dabei ist es regelmäßig erforderlich, dass die Maische, in der ein Gemisch aus Feststoffpartikeln, nämlich den ausgesüßten Getreidepartikeln, und einer Flüssigkeit, nämlich üblicherweise Wasser, vorliegt, abgefiltert wird, um die in der Maische enthaltenen Partikel abzutrennen. Bei der Bierherstellung wird dabei vielfach ein Läuterbottich eingesetzt, in dem sich eine Treberschicht als Filter ausbildet. Nach dem Abläutern wird der Treber dann aus dem Läuterbottich entfernt und muss anschließend entsorgt werden.

Alternativ zur Verwendung eines Läuterbottichs sind auch so genannte Maischefilter bekannt, in denen unter Verwendung eines Filterelements, beispielsweise eines Filtertuchs, die Maische abgefiltert wird. Auch hier müssen die im Maischefilter anfallenden Filtrationspartikel später entsorgt werden.

Traditionell werden Biertreber als Futtermittel verwertet. Dies ist jedoch deshalb problematisch, da der Absatz der Biertreber im Jahresverlauf mengen- und preismäßig sehr unterschiedlich ist. Im Winter ist die Absatzmöglichkeit deutlich besser als im Sommer, wenn für die Verfütterung ausreichend Grünfutter zur Verfügung steht. Demgegenüber ist die Bierproduktion jedoch generell in den Sommermonaten deutlich höher als im Winter. Die im Sommer anfallende Trebermenge kann deshalb häufig nicht als Futtermittel vermarktet werden. Insbesondere im Sommer müssen Biertreber deshalb häufig als Sondermüll auf Deponien zu hohen Kosten endgelagert werden.

Alternativ zur Verwertung des Biertrebers als Futtermittel ist auch die thermische Verwertung der Filtrationspartikel bekannt. Die EP 1 007 884 B1 beschreibt eine Sudhausanlage, in der die Biertreber zur Energiegewinnung thermisch verwertet werden. Die Biertreber werden dabei zweistufig vorgetrocknet und anschließend thermisch umgesetzt. Für die Verbrennung der Biertreber werden dabei üblicherweise Rostbrennanlagen verwendet, bei denen die Biertreber auf einem Feuerungsrost aufgelegt und schrittweise verbrannt werden.

Nachteilig an dieser Rostfeuerung ist es, dass die verwendeten Filtrationspartikel eine bestimmte Mindestgröße aufweisen müssen, da die Filtrationspartikel ansonsten durch den Feuerungsrost hindurch fallen. Außerdem fallen bei der Rostfeuerung größere Mengen unerwünschter Abgase, insbesondere Stickoxide und Kohlenstoffoxide, an, die anschließend aufwendig mit entsprechend geeigneten Abgasreinigungsanlagen entfernt und umgewandelt werden müssen.

Die bekannten Rostfeuerungsanlagen zur thermischen Verwertung von Filtrationspartikeln aus Sudhausanlagen sind insbesondere dann ungeeignet, wenn es sich bei den Feststoffpartikeln um Hammermühlenschrot handelt, das sehr feine Partikel enthält und mit einem Maischefilter abfiltriert wird.

Ausgehend von diesem Stand der Technik ist es deshalb Aufgabe der vorliegenden Erfindung, eine neue Sudhausanlage mit thermischer Verwertung der Filtrationspartikel vorzuschlagen, die eine Nutzung von Partikeln letztendlich beliebiger Größe und geringen Abgaswerten ermöglicht. Weiter ist es Aufgabe der vorliegenden Erfindung, ein entsprechend geeignetes Verwertungsverfahren zur thermischen Verwertung der Filtrationspartikel vorzuschlagen.

Diese Aufgaben werden durch eine Sudhausanlage und ein Verfahren nach der Lehre der beiden unabhängigen Hauptansprüche gelöst.

Kern der erfindungsgemäßen Sudhausanlage ist eine Feststoffverbrennungseinrichtung, in deren Brennkammer die Filtrationspartikel eingefördert und durch Verbrennung thermisch verwertet werden. Die Feststoffverbrennungseinrichtung weist dabei eine primäre Luftzufuhreinrichtung auf, mit der in der Brennkammer eine stationäre Luftströmungszone aufgebaut werden kann. In dieser stationären Luftströmungszone strömt die Verbrennungsluft in einer turbulenten Luftströmung und bildet auf diese Weise ein Strömungsbett. In dieses durch die Verbrennungsluft gebildete Strömungsbett werden dann die Filtrationspartikel eingefördert und vermischen sich mit der Verbrennungsluft zu einer stationären Luft-Partikel-Strömung. Im Ergebnis werden also die Filtrationspartikel in der Brennkammer durch das Strömungsbett in der Schwebe gehalten und können mit der Verbrennungsluft thermisch reagieren. Aufgrund dieses Schwebezustands der Filtrationspartikel in der Brennkammer können auch sehr kleine Filtrationspartikel, wie sie insbesondere bei der Verwendung von Hammermühlenschrot zur Maischeherstellung anfallen, problemlos thermisch verbrannt werden.

Zur Stabilisierung des Verbrennungsprozesses in der Brennkammer können zusätzlich auch noch Feststoffpartikel, beispielsweise Quarzsandpartikel, in der stationären Luft-Partikel-Strömungszone enthalten sein. Diese Feststoffpartikel, die beispielsweise eine Korngrößenverteilung im Bereich von 600 µm bis 1400 µm aufweisen, nehmen selbst nicht an der thermischen Reaktion teil und dienen der Moderation des eigentlichen Verbrennungsprozesses.

In welcher Weise die Verbrennungsluft zur Bildung der das Strömungsbett bildenden Luftströmungszone ausgebildet ist, ist grundsätzlich beliebig. Besonders vorteilhaft ist es, wenn die Brennkammer einen Boden mit einer Vielzahl von Luftdüsen aufweist, die die primäre Luftzufuhreinrichtung bilden. Durch diese Luftdüsen kann die Verbrennungsluft von unten nicht in die stationäre Luft-Partikel-Strömungszone nachgefördert werden. Aufgrund der aufwärts gerichteten Strömungsrichtung der Verbrennungsluft wird ein Herabfallen der Filtrationspartikel auf den Boden der Brennkammer weitgehend vermieden und das Strömungsbett in der stationären Luft-Strömungszone stabilisiert.

Die Bauart der Partikelzuführeinrichtung, mit der die Filtrationspartikel in die Brennkammer der Feststoffverbrennungseinrichtung eingefördert werden, ist ebenfalls grundsätzlich beliebig. Die Partikelzuführeinrichtung, beispielsweise ein Schneckendosiergerät, sollte dabei bevorzugt so angeordnet sein, dass die Filtrationspartikel von oben in die stationäre Luft-Partikel-Strömungszone nachgefördert werden. Dies bedeutet mit anderen Worten, dass die Filtrationspartikel von oben auf das Strömungsbett fallen und dort sofort verbrennen. Eine mechanische Fixierung der Filtrationspartikel in der Brennkammer, beispielsweise ein Verbrennungsrost, entfällt insofern.

Nach der Verbrennung der Filtrationspartikel in der Luft-Partikel-Strömungszone können noch Restanteile an Filtrationspartikeln im Rauchgas verbleiben. Um die in diesen Restanteilen verbliebenen Energieanteile auch noch nutzen zu können und zugleich auch eine Verbesserung der Abgaswerte zu erreichen, ist es besonders vorteilhaft, wenn oberhalb der stationären Luft-Partikel-Strömungszone eine zweite, sekundäre Luftzuführeinrichtung vorgesehen ist, mit der zusätzliche Verbrennungsluft in die Brennkammer eingefördert werden kann. Diese zusätzliche sekundäre Verbrennungsluft mischt sich mit den Reaktionsprodukten aus der ersten Verbrennungszone und gelangt in eine nachgeordnete Nachbrennkammer, wo die verbliebenen Restanteile an Filtrationspartikeln dann weitgehend vollständig verbrannt werden.

Um die zusätzliche Verbrennungsluft möglichst gleichmäßig zuführen zu können, ist es besonders vorteilhaft, wenn die zweite, sekundäre Luftzufuhreinrichtung von mehreren Luftdüsen gebildet wird, die beispielsweise kreisförmig über dem Feuerraumquerschnitt der Feststoffverbrennungseinrichtung verteilt sind. Auf diese Weise kann die zusätzliche Verbrennungsluft von allen Seiten zugleich eingeblasen und mit dem Rauchgas aus der ersten Verbrennungszone gemischt werden.

Der Querschnitt der Feststoffverbrennungseinrichtung in der Nachbrennkammer sollte dabei möglichst größer sein als der Querschnitt der Brennkammer im Bereich der stationären Luft-Partikel-Strömungszone.

Außerdem sollten die Einströmöffnungen der zweiten, sekundären Luftzufuhreinrichtung ungefähr 0,5 m bis 5 m, insbesondere 1 m bis 3 m, oberhalb der stationären Luft-Partikel-Strömungszone angeordnet sein, um einen optimalen Verbrennungsprozess in der Nachbrennkammer mit guten Abgaswerten zu erreichen.

Um die nicht gasförmigen Verbrennungsprodukte besser abführen zu können, ist es vorteilhaft, Verschlackungshemmstoffe, beispielsweise Kalksteinpulverpartikel, in die Feststoffverbrennungseinrichtung einzufördern.

Außerdem sollte die Feststoffverbrennungseinrichtung mit einem Anfahrbrenner ausgestattet sein, um den anschließenden selbsterhaltenden Verbrennungsprozess in der Luft-Partikel-Strömungszone zunächst in Gang bringen zu können.

Die Verfeuerung der Filtrationspartikel in der Feststoffverbrennungseinrichtung soll nach dem Anfeuern in einem selbsterhaltenden Feuerungsprozess ohne Stützfeuerung aus fossiler Energie durchgeführt werden können. Durch die erfindungsgemäße Bildung einer stationären Luftströmungszone mit turbulenter Verbrennungsluftströmung können die Biertreber auch dann noch verbrannt werden, wenn sie einen relativ sehr hohen Restfeuchtegehalt aufweisen. Biertreber können beispielsweise nach dem Austrebern einen Wassergehalt von 75 bis 80 Gewichtsprozent aufweisen. Um den Heizwert des Biertrebers jedoch zu verbessern, ist es von Vorteil, wenn in der Feststoffverbrennungsvorrichtung zumindest eine Vortrocknungseinrichtung vorgesehen ist, mit der der Restfeuchtegehalt der Filtrationspartikel vor dem Verbrennen reduziert werden kann.

Gemäß einer ersten Variante kann die Vortrocknungseinrichtung einen Feldgenerator zur Erzeugung elektrischer Felder, insbesondere hochfrequenter elektrischer Felder, umfassen. Durch Einsatz solcher elektrischer Felder kann das Kapillarwasser aus den Filtrationspartikeln zumindest teilweise verdrängt und damit der Restfeuchtegehalt entsprechend reduziert werden.

Weiter ist es besonders vorteilhaft, wenn die Vortrocknungseinrichtung zumindest teilweise mit Solarenergie beheizt wird, da auf diese Weise der Einsatz von fossilen Brennstoffen entsprechend reduziert werden kann.

Wie bereits beschrieben, können aufgrund des erfindungsgemäßen Verbrennungsprozesses in der erfindungsgemäßen Sudhausanlage auch Filtrationspartikel mit einem beliebigen Restfeuchtegehalt verbrannt werden. Eine sehr aufwendige Vortrocknung der Filtrationspartikel, wie sie beispielsweise die EP 1 007 884 B1 beschreibt, kann deshalb entfallen und eingespart werden. Gemäß einer ersten bevorzugten Ausführungsvariante zur Vortrocknung der Filtrationspartikel ist es vorgesehen, dass die Filtrationspartikel zweistufig mit einer mechanischen Vortrocknungseinrichtung mechanisch entwässert und in einer thermischen Vortrocknungseinrichtung thermisch vorgetrocknet werden. Als thermische Vortrocknungseinrichtung ist dabei jedoch ein ganz einfacher Rohrbündelwärmetauscher vorgesehen, der primärseitig von Dampf und sekundärseitig von Filtrationspartikeln durchströmt wird. Ohne direkten Kontakt zwischen Dampf und den Filtrationspartikeln wird somit die Wärmeenergie vom Dampf auf die Filtrationspartikel übertragen und die gewünschte Trocknung damit initiiert.

Um die Vortrocknung demgegenüber noch weiter zu vereinfachen, ist es nach einer alternativen Ausführungsform vorgesehen, dass die Filtrationspartikel lediglich einstufig mit einer mechanischen Vortrocknungseinrichtung mechanisch entwässert und nicht thermisch vorgetrocknet werden. Zur mechanischen Vortrocknung kann dabei insbesondere eine Schneckenpresse eingesetzt werden.

Alternativ zur einstufigen mechanischen Vortrocknung kann auch eine einstufige thermische Vortrocknung vorgesehen werden. Dabei wird eine thermische Vortrocknungseinrichtung verwendet, in der die Filtrationspartikel durch Beheizen thermisch vorgetrocknet und nicht mechanisch entwässert werden.

Die Bauart einer solchen einstufigen thermischen Vortrocknungseinrichtung ist grundsätzlich beliebig. Besonders kostengünstig ist die Verwendung von so genannten Konvektionstrocknern, bei denen die Filtrationspartikel durch unmittelbaren Kontakt mit heißem Gas, beispielsweise Rauchgas, thermisch vorgetrocknet werden.

Alternativ dazu können auch so genannte Wirbelschichttrockner als thermische Vortrocknungseinrichtung eingesetzt werden.

Wird das Wasser in einer ein- oder zweistufigen Vortrocknungseinrichtung auch mechanisch vorgetrocknet, so fällt dabei Presswasser als Abwasser an. Zur Weiterverarbeitung dieses Presswassers sollten deshalb in der Sudhausanlage ein Presswasserspeichertank und/oder eine Abwasserwasseraufbereitungsanlage vorgesehen sein.

Der Klärschlamm der Abwasseraufbereitungsanlage kann gegebenenfalls auch ergänzend den Filtrationspartikeln vor der Verbrennung in der Feststoffverbrennungseinrichtung zugegeben und mit in die Brennkammer eingefördert werden, um eine Deponierung des Klärschlamms zu vermeiden.

Das Presswasser aus der mechanischen Vortrocknung kann dazu verwendet werden, Biogas in einer Biogasanlage herzustellen. Dieses Biogas kann dann anschließend in einer Wärmekraftmaschine, beispielsweise einem Blockheizkraftwerk, verbrannt werden, um elektrische Energie und/oder Wärmeenergie zu erzeugen und für die Sudhausanlage zu nutzen.

Die bei der Feststoffverbrennung anfallende Wärmeenergie kann zur Erzeugung von Dampf in einer Dampferzeugungseinrichtung genutzt werden. Dieser Dampf kann dann in der Sudhausanlage zur Unterhaltung anderer Prozesse weiterverwendet werden.

Um den mit der Wärmeenergie aus der Feststoffverbrennung hergestellten Dampf weitgehend frei in der Sudhausanlage verteilen zu können, sollte die Sudhausanlage mit einem Dampfnetz ausgestattet sein, in das der aus der Feststoffverbrennung resultierende Dampf eingespeist werden kann.

Insbesondere die thermische Vortrocknungseinrichtung kann dann auch mit dem Dampf aus der Feststoffverbrennung beheizt und der entsprechende Vortrocknungsprozess somit ohne Verbrennung von fossilen Brennstoffen unterhalten werden.

Alternativ oder additiv zur Dampferzeugung in einer Dampferzeugungseinrichtung kann die bei der Feststoffverbrennung anfallende Wärmeenergie auch zur Erwärmung eines Thermoöls in einem Thermoölkessel Verwendung finden. Zur Zuteilung des Thermoöls an verschiedene Energieverbraucher in der Sudhausanlage kann wiederum ein entsprechendes Thermoölnetz vorgesehen sein.

Um den bei der Feststoffverbrennung entstehenden Rauchgasen die darin enthaltene Wärmeenergie weitgehend entziehen zu können, ist es besonders vorteilhaft, wenn der Feststoffverbrennungseinrichtung eine Heißwassererzeugungseinheit mittelbar oder unmittelbar nachgeordnet ist. In dieser Heißwassererzeugungseinheit kann dem Rauchgas, das beispielsweise nach der Dampferzeugung oder nach der Thermoölerzeugung noch enthaltene Restenergieniveau entzogen und zur Heißwasserbereitung genutzt werden.

Außerdem ist es vielfach vorteilhaft und notwendig, der Feststoffverbrennungseinrichtung eine Rauchgasreinigungsanlage nachzuordnen, um die bei der Verbrennung der Filtrationspartikel entstehenden Rauchgase vor dem Ablassen in die Umgebungsluft zu reinigen.

Das erfindungsgemäße Verfahren kann zur thermischen Verwertung von feuchten Filtrationspartikeln, die in einer Sudhausanlage oder in einer sonstigen Alkoholgewinnungsanlage durch Trennen der Feststoffe von der flüssigen Phase der Maische anfallen, eingesetzt werden. Insbesondere wenn es sich bei den Feststoffpartikeln um so genannte DDG- oder DDGS-Partikel (Distillers Dried Grains/Distillers Dried Grains and Solubles) handelt oder die Filtrationspartikel aus Hammermühlenschrot stammen, bietet das erfindungsgemäße Verfahren große Vorteile, da die Partikelgröße der abgetrennten Feststoffe letztlich keine Rolle spielt.

Bei der Durchführung des erfindungsgemäßen Verfahrens werden in die Brennkammer gleichzeitig Verbrennungsluft und Filtrationspartikel in einer Weise eingefördert, dass sich eine stationäre Luftströmungszone mit turbulenter Luftströmung bildet, so dass sich die Filtrationspartikel mit der turbulenten Luftströmung zu einer stationären Luft-Partikel-Strömung vermischen. Die Filtrationspartikel werden dann in dieser turbulenten Luftströmungszone durch thermische Reaktion verbrannt und dadurch energetisch genutzt.

Der Verbrennungsprozess in der Luft-Partikel-Strömungszone sollte dabei bevorzugt bei einer Temperatur von durchschnittlich 800° C bis 900° C, insbesondere ungefähr 850° C, ablaufen. Bei dieser Verbrennungstemperatur im Strömungsbett werden sehr gute Abgaswerte erreicht, und eine weitgehend vollständige Verbrennung der Filtrationspartikel ist gewährleistet.

Die Verbrennungsluft sollte bevorzugt von unten in die stationäre Luft-Partikel-Strömungszone nachgefördert werden, wohingegen die Filtrationspartikel bevorzugt von oben in die Luft-Partikel-Strömungszone nachfallen.

Soweit neben der primären Luftströmung zur Ausbildung des Strömungsbetts in der Luft-Partikel-Strömungszone auch noch Sekundärluft über eine weitere Luftzuführeinrichtung hinzugeführt wird, sollte der Volumenanteil der sekundären Verbrennungsluft im Verhältnis zum Volumenanteil der primären Verbrennungsluft bevorzugt im Bereich von 30 % bis 70 % liegen. Dieses Verhältnis der Volumenanteile zwischen sekundärer Verbrennungsluft und primärer Verbrennungsluft garantiert die erforderlichen Anströmgeschwindigkeiten zur Aufrechterhaltung des Strömungsbetts sowie eine ausreichende Kontrolle der Verbrennungstemperaturen zur Einhaltung der Emissionsgrenzwerte.

Außerdem können zur Verminderung der Bildung von Brennschlacke Verschlackungshemmstoffe, insbesondere Kalksteinpartikel, in die Brennkammer zugeführt werden.

Verschiedene Aspekte der Erfindung sind in den Zeichnungen schematisch dargestellt und werden nachfolgend beispielhaft erläutert.

Es zeigen:
- Fig. 1: eine Feststoffverbrennungseinrichtung zur Verbrennung von Filtrationspartikeln gemäß der erfindungsgemäßen Lehre in einem schematisierten Querschnitt;
- Fig. 2: eine Variante der Feststoffverbrennungseinrichtung gemäß Fig. 1 in einem schematisierten Querschnitt;
- Fig. 3: das Blockschaltbild einer ersten Ausführungsform einer erfindungsgemäßen Sudhausanlage;
- Fig. 4: das Blockschaltbild einer zweiten Ausführungsform einer erfindungsgemäßen Sudhausanlage;
- Fig. 5: das Blockschaltbild einer dritten Ausführungsform einer erfindungsgemäßen Sudhausanlage;
- Fig. 6: das Blockschaltbild einer vierten Ausführungsform einer erfindungsgemäßen Sudhausanlage;
- Fig. 7: das Blockschaltbild einer fünften Ausführungsform einer erfindungsgemäßen Sudhausanlage;
- Fig. 8: das Blockschaltbild einer sechsten Ausführungsform einer erfindungsgemäßen Sudhausanlage.

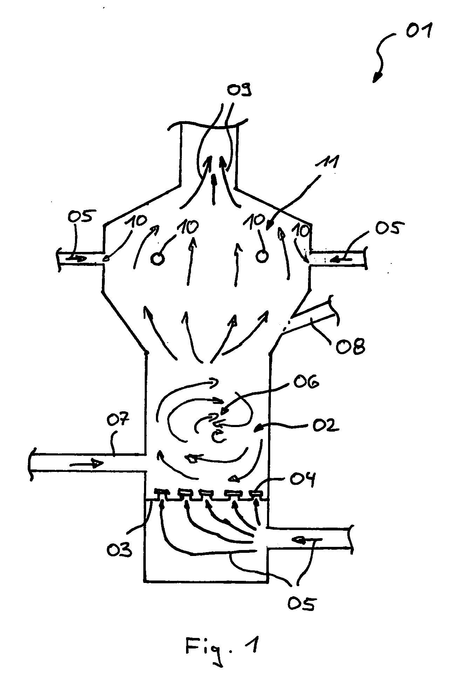

Fig. 1 zeigt eine Feststoffverbrennungseinrichtung 01 mit einer Brennkammer 02 zur Verbrennung von Filtrationspartikeln, insbesondere Biertrebern, wie sie beispielsweise bei der Bierherstellung während des Läuterprozesses anfallen. In einem Boden 03 der Brennkammer 02 ist eine Vielzahl von Luftdüsen 04 vorgesehen, durch die Verbrennungsluft 05, gefördert durch ein Lüftergebläse, von unten in die Brennkammer 02 einströmt und in einer stationären Luftströmungszone 06 eine turbulente Luftströmung bildet. Mit einem nicht dargestellten Schneckendosiergerät wird der Biertreber durch einen Zugang 07 in die stationäre Luftströmungszone 06 eingefördert und vermischt sich mit der Verbrennungsluft 05 zu einer stationären Luft-Partikel-Strömung. Zur Zündung dieses Gemisches aus Verbrennungsluft und Treberpartikeln ist ein Anfahrbrenner 08 vorgesehen, der beispielsweise mit Gas oder Öl beheizt ist. Durch das Zünden des Gemisches aus Verbrennungsluft und Treberpartikeln bilden sich heiße Rauchgase 09, die zunächst noch einen Restanteil an unverbrannten Treberpartikeln enthalten. Mittels ringförmig angeordneter Einströmdüsen 10 wird sekundäre Verbrennungsluft in eine Nachbrennkammer 11 eingefördert, um auch die unverbrannten Restanteile vorn Treberpartikeln noch zu verbrennen. Anschließend werden die heißen Rauchgase 09 nach oben abgeführt.

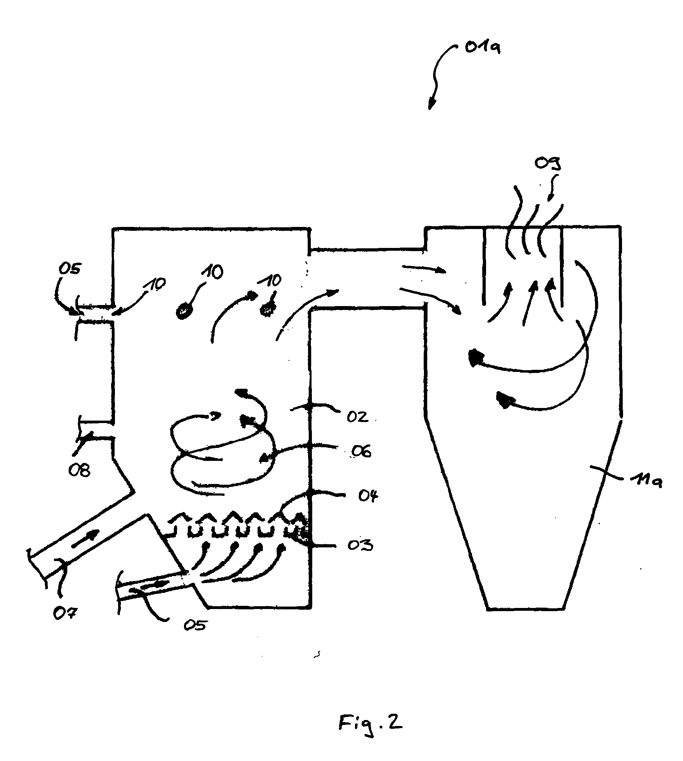

Fig. 2 zeigte eine Variante 01a der Feststoffverbrennungseinrichtung gemäß Fig. 1 in einem schematisierten Querschnitt. Diese Feststoffverbrennungseinrichtung 01a unterscheidet sich dadurch, dass die Nachbrennkammer 11a nicht unmittelbar über der Luftströmungszone 06, sondern daneben angeordnet ist. Durch einen vertikalen Verbindungskanal können die Rauchgase 09 aus der Brennkammer 02 in die separate Nachbrennkammer 11a überströmen.

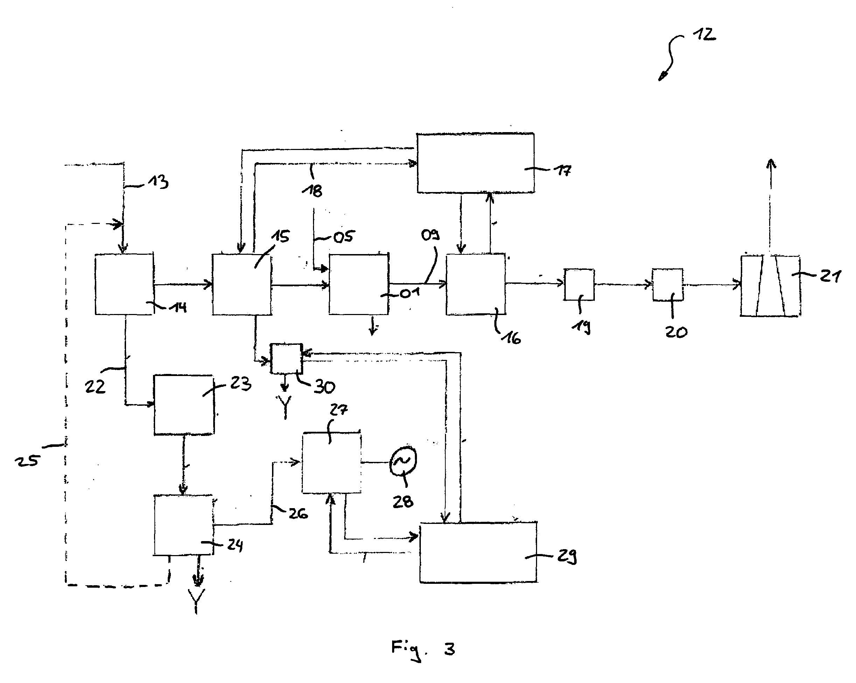

Fig. 3 bis Fig. 8 zeigen die Blockschaltbilder unterschiedlicher Sudhausanlagen mit Feststoffverbrennungseinrichtungen 01 zur thermischen Verwertung von Trebern. In den Blockschaltbildern sind dabei jeweils nur die Teile der Anlage gezeigt, die für das Verständnis der Erfindung von Bedeutung sind.

Die in Fig. 3 dargestellte erste Ausführungsform 12 einer Sudhausanlage wird aus einem Treberspeichergefäß mit feuchtem Biertreber 13 versorgt.

Der feuchte Biertreber 13 wird zunächst in einer mechanischen Vortrocknungseinrichtung 14, nämlich einer Schneckenpresse, mechanisch entwässert und anschließend in einer thermischen Vortrocknungsstufe 15, nämlich einem dampfbeheiztem Kontakttrockner, thermisch vorgetrocknet. Anschließend erfolgt die Verbrennung des Biertrebers in der Feststoffverbrennungseinrichtung 01 unter Zuführung von Verbrennungsluft 05. Der Feststoffverbrennungseinrichtung 01 ist eine Dampferzeugungseinrichtung 16 nachgeordnet, in der Heißdampf hergestellt und an ein Dampfnetz 17 weitergeleitet werden kann. Die thermische Vortrocknung in der Vortrocknungseinrichtung 15 erfolgt dabei unter Benutzung von Dampf aus dem Dampfnetz 17. Das heißt mit anderen Worten, dass die Beheizung des Rohrbündelwärmetauschers in der thermischen Vortrocknungseinrichtung 15 unter Verwendung von Dampf erfolgt, der durch Verbrennung der Filtrationspartikel erzeugt wird. Das Kondensat 18 aus der thermischen Vortrocknungseinrichtung 15 wird über eine Rückführleitung dem Kondensatsystem im Dampfnetz 17 zugeführt.

Der Dampferzeugungseinrichtung 16 ist eine Heißwassererzeugungseinrichtung (Economizer) 19 nachgeschaltet, in der die im Rauchgas aus der Feststoffverbrennungseinrichtung 01 nach der Dampferzeugung in der Dampferzeugungseinrichtung 16 noch enthaltene Wärmeenergie weiter entzogen wird. Anschließend wird das Rauchgas in einer Rauchgasreinigungseinrichtung 20 aufbereitet und über eine Schlotanlage 21 abgelassen.

Das Presswasser 22 aus der mechanischen Vortrocknungseinrichtung 14 wird in einen Presswasserspeichertank 23 gepumpt und anschließend in einer Abwasseraufbereitungsanlage 24 aufbereitet. Das Abwasser aus der Abwasseraufbereitungsanlage 24 wird anschließend abgelassen. Der Klärschlamm 25 aus der Abwasseraufbereitungsanlage 24 kann zurückgeführt und zusammen mit den Biertrebern verbrannt werden. In der Abwasseraufbereitungsanlage 24 werden durch anaerobe Abwasseraufbereitung die im Abwasser 22 enthaltenen verwertbaren Inhaltsstoffe fermentiert und dadurch wird Biogas 26 hergestellt. Das Biogas 26 wird in einem Blockheizkraftwerk 27 verbrannt, um mit einem Generator 28 Strom zu erzeugen. Das im Blockheizkraftwerk 27 zur Kühlung eingesetzte Wasser wird als Heißwasser in das Heißwassernetz 29 eingespeist.

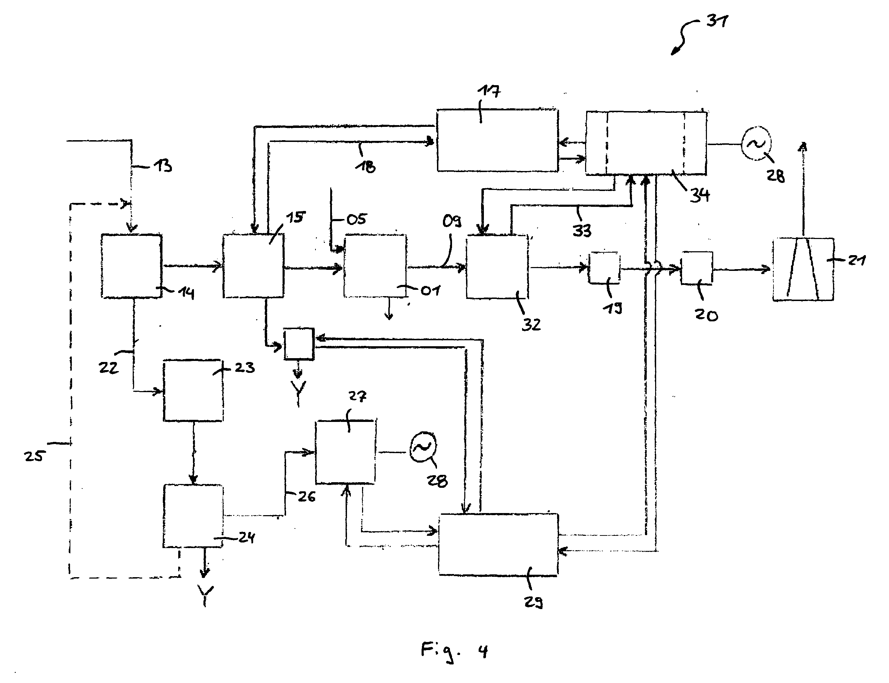

Die in Fig. 4 dargestellte zweite Ausführungsform 31 einer erfindungsgemäßen Sudhausanlage stimmt in ihrem Aufbau weitgehend mit der Anlage 12 gemäß Fig. 2 überein. Die beiden Anlagen 31 und 12 unterscheiden sich durch die Nutzung der in der Feststoffverbrennungseinrichtung 01 entstehenden heißen Rauchgase. Zu deren Nutzung ist in der Anlage 31 ein Thermoölkessel 32 vorgesehen, mit dem Thermoöl 33 erhitzt und in ein Thermoölnetz 34 eingespeist werden kann. Das Thermoölnetz 28, das beispielsweise einen ORC-Kreislauf bilden kann, kann zur Erzeugung von Strom mittels eines Generators 28 genutzt werden.

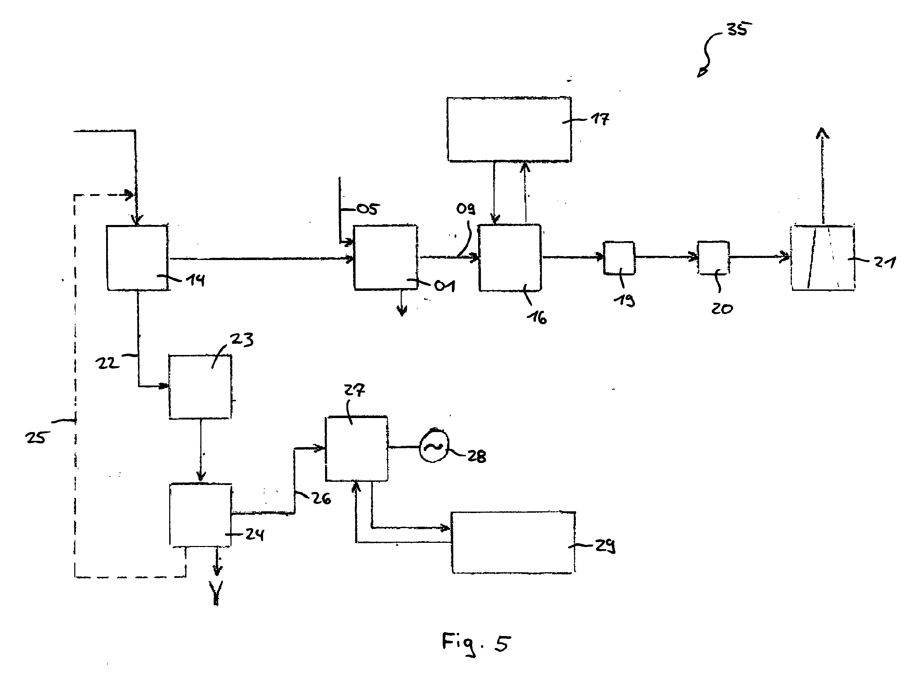

Die in Fig. 5 dargestellte dritte Ausführungsform 35 einer erfindungsgemäßen Sudhausanlage entspricht in ihrem grundsätzlichen Aufbau wiederum der in Fig. 2 dargestellten Sudhausanlage 12. Die Unterscheidung zu der Sudhausanlage 12 liegt bei der Sudhausanlage 35 darin, dass die Vortrocknung lediglich einstufig in der mechanischen Vortrocknungseinrichtung 14 erfolgt und eine thermische Vortrocknung dagegen entfällt.

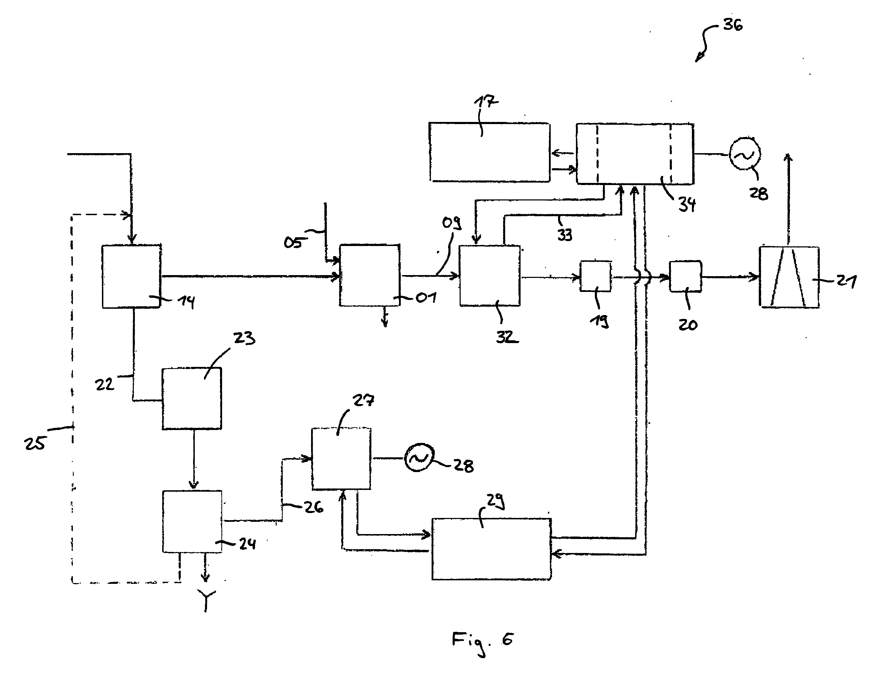

Bei der in Fig. 6 dargestellten vierten Ausführungsform 36 einer erfindungsgemäßen Sudhausanlage handelt es sich um eine Abwandlung der Sudhausanlage 31 gemäß Fig. 3. Die Sudhausanlage 31 wird dabei so abgewandelt, dass auch hier die Vortrocknung nur in der mechanischen Vortrocknungseinrichtung 14 erfolgt und eine thermische Vortrocknung dagegen entfällt.

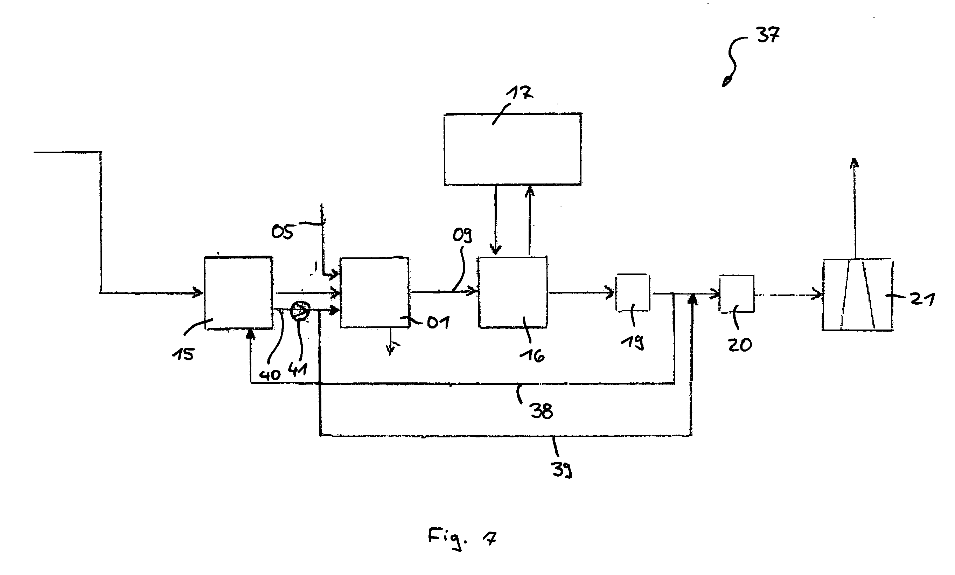

Bei der in Fig. 7 dargestellten Ausführungsform 37 einer erfindungsgemäßen Sudhausanlage ist dagegen nur eine thermische Vortrocknung in der thermischen Vortrocknungseinrichtung 15 vorgesehen. Die Wärmeenergie zum Betrieb der thermischen Vortrocknungseinrichtung wird dabei den in der Verbrennungseinrichtung 01 entstehenden Rauchgasen entnommen. Diese Rauchgase werden dazu nach dem Passieren der Heißwasserherstellungseinrichtung 19 über eine Verbindungsleitung 38 in die thermische Vortrocknungseinrichtung 15 eingeleitet und im Verschnitt mit den Rauchgasen aus dem Economizer mittels Verbindungsleitungen 39 dem thermischen Trockner zugeführt. Die Abluft aus der thermischen Vortrocknungseinrichtung 15 wird durch eine Leitung 38 zur Rezirkulation und Nachverbrennung der Feststoffverbrennungseinrichtung 01 zugeführt. Damit entsprechende Strömungsgeschwindigkeiten in der Verbindungsleitung 40 gewährleistet sind, ist zusätzlich ein Ventilator 41 vorgesehen.

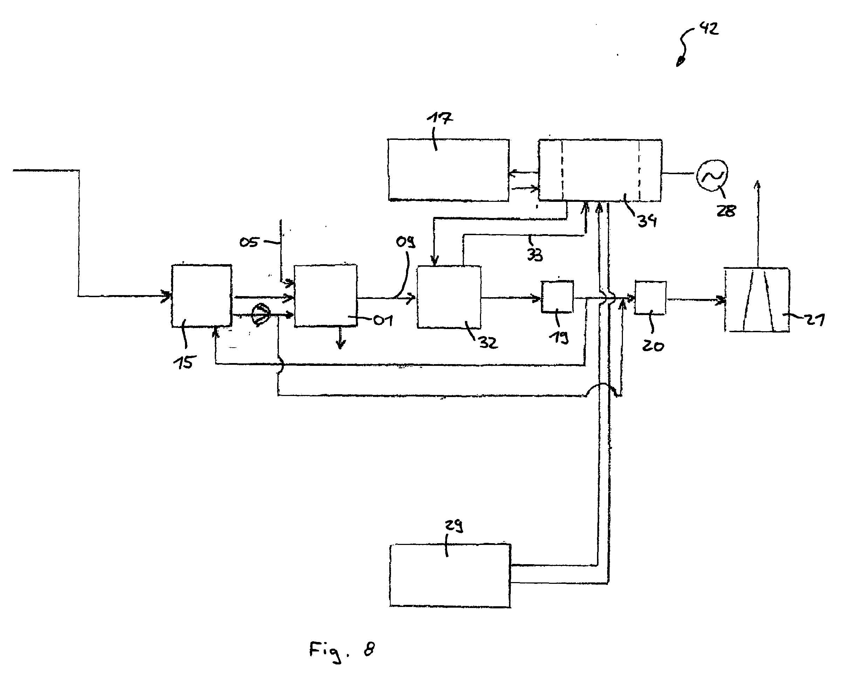

Die in Fig. 8 dargestellte Sudhausanlage 42 entspricht in ihrem Aufbau der Sudhausanlage 37, wobei jedoch hier wiederum Thermoöl 33 in einem Thermoölerzeuger 32 erhitzt wird.

## Patentansprüche

1. Sudhausanlage (12, 31, 35, 36, 37, 42) mit einer Filtrationseinrichtung, insbesondere mit einem Läuterbottich oder einem Maischefilter, wobei in der Filtrationseinrichtung die in der Maische enthaltenen Partikel von der Würze getrennt werden, und mit einer Feststoffverbrennungseinrichtung (01), wobei die feuchten Filtrationspartikel mit einer Partikelzuführeinrichtung (07) und Verbrennungsluft (05) mit einer Luftzufuhreinrichtung (03, 04) in eine Brennkammer (02) der Feststoffverbrennungseinrichtung (01) zugeführt werden, und wobei die Filtrationspartikel durch Verbrennen in der Feststoffverbrennungseinrichtung (01) thermisch verwertet werden,
**dadurch gekennzeichnet,**
**dass** die Feststoffverbrennungseinrichtung (01) eine primäre Luftzufuhreinrichtung (03, 04) aufweist, mit der die Verbrennungsluft (05) unter Bildung einer stationären Luftströmungszone (06) in die Brennkammer eingefördert werden kann, und wobei mit der Partikelzuführeinrichtung (07) die Filtrationspartikel in die turbulente Luftströmung der stationären Luftströmungszone (06) in der Brennkammer (02) eingefördert werden können, und wobei durch Vermischung der Filtrationspartikel mit der Verbrennungsluft (05) eine stationäre Luft-Partikel-Strömungszone gebildet wird, und wobei die Filtrationspartikel durch thermische Reaktion in der Luft-Partikel-Strömungzone verbrannt werden.

2. Sudhausanlage nach Anspruch 1,
**dadurch gekennzeichnet,**
**dass** die Feststoffverbrennungseinrichtung (01) oberhalb der stationären Luft-Partikel-Strömungzone eine zweite, sekundäre Luftzufuhreinrichtung (10) aufweist, mit der zusätzliche Verbrennungsluft (05) in die Feststoffverbrennungseinrichtung (01) eingefördert werden kann, wobei die sekundäre Verbrennungsluft (05) mit dem im Verbrennungsgas verbliebenen Restanteil an Filtrationspartikeln vermischt und in einer nachgeordneten Nachbrennkammer (11) verbrannt wird.

3. Sudhausanlage nach Anspruch 2,
**dadurch gekennzeichnet,**
**dass** die zweite, sekundäre Luftzufuhreinrichtung (10) von mehreren Luftdüsen gebildet wird, die insbesondere kreisförmig über den Feuerraumquerschnitt der Feststoffverbrennungseinrichtung (01) verteilt sind.

4. Sudhausanlage nach Anspruch 2 oder 3,
**dadurch gekennzeichnet,**
**dass** der Feuerraumquerschnitt der Feststoffverbrennungseinrichtung (01) im Bereich der Brennkammer (02) mit der stationären Luft-Partikel-Strömungzone kleiner ist als der Feuerraumquerschnitt im Bereich der Nachbrennkammer (11).

5. Sudhausanlage nach einem der Ansprüche 2 bis 4,
**dadurch gekennzeichnet,**
**dass** die Einströmöffnung der zweiten, sekundären Luftzufuhreinrichtung (10) 0,5m bis 5m, insbesondere 1m bis 3m, oberhalb der stationären Luft-Partikel-Strömungzone angeordnet ist.

6. Sudhausanlage nach einem der Ansprüche 1 bis 5,
**dadurch gekennzeichnet,**
**dass** die Feststoffverbrennungseinrichtung (01) einen Anfahrbrenner (08) zur Zündung des selbsterhaltenden Verbrennungsprozesses in der Luft-Partikel-Strömungzone aufweist.

7. Sudhausanlage nach einem der Ansprüche 1 bis 6,
**dadurch gekennzeichnet,**
**dass** zwischen der Filtrationseinrichtung und der Feststoffverbrennungseinrichtung (01) zumindest eine Vortrocknungseinrichtung (14, 15) vorgesehen ist, mit der der Restfeuchtegehalt der Filtrationspartikel vor dem Verbrennen reduziert werden kann.

8. Sudhausanlage nach Anspruch 7,
**dadurch gekennzeichnet,**
**dass** die Vortrocknungseinrichtung einen Feldgenerator zur Erzeugung elektrischer Felder, insbesondere zur Erzeugung hochfrequenter elektrischer Felder, umfasst, wobei durch Einwirkung der elektrischen Felder Kapillarwasser aus den Filtrationspartikeln verdrängt wird und/oder dass die Vortrocknungseinrichtung zumindest teilweise mit Solarenergie beheizt wird.

9. Sudhausanlage nach Anspruch 7 oder 8,
**dadurch gekennzeichnet,**
**dass** die Filtrationspartikel zweistufig mit einer mechanischen Vortrocknungseinrichtung (14) mechanisch entwässert und in einer thermischen Vortrocknungseinrichtung (15) thermisch vorgetrocknet werden, wobei die thermische Vortrocknungseinrichtung (15) zumindest einen mit Dampf beheizten Wärmetauscher, insbesondere einen Rohrbündelwärmetauscher, umfasst, der primärseitig von Dampf und sekundärseitig von den Filtrationspartikeln durchströmt wird.

10. Sudhausanlage nach einem der Ansprüche 7 bis 9,
**dadurch gekennzeichnet,**
**dass** die Filtrationspartikel einstufig vorgetrocknet werden, wobei die Filtrationspartikel entweder mit einer mechanischen Vortrocknungseinrichtung (14), insbesondere einer Schneckenpresse, nur mechanisch entwässert und nicht thermisch vorgetrocknet werden oder mit einer thermischen Vortrocknungseinrichtung (15), insbesondere mit einem Konvektionstrockners, in dem die Filtrationspartikel in unmittelbaren Kontakt mit heißem Gas gebracht werden, thermisch vorgetrocknet und nicht mechanisch entwässert werden.

11. Sudhausanlage nach Anspruch 7 oder 10,
**dadurch gekennzeichnet,**
**dass** die thermische Vortrocknungseinrichtung (15) mit zumindest einem Teil der bei der Verbrennung der Filtrationspartikel entstehenden Rauchgase (09) beheizt wird, und/oder dass die thermische Vortrocknungseinrichtung (15) in der Art eines Wirbeelschichttrockners ausgebildet ist.

12. Sudhausanlage nach einem der Ansprüche 7 bis 11,
**dadurch gekennzeichnet,**
**dass** der mechanischen Vortrocknungseinrichtung (14) ein Presswasserspeichertank (23) und/oder eine Abwasseraufbereitungsanlage (24) nachgeordnet sind, wobei der Klärschlamm der Abwasseraufbereitungsanlage (24) zumindest teilweise in die Feststoffverbrennungseinrichtung (01) eingefördert und zusammen mit den Filtrationspartikeln verbrannt werden kann, und wobei der Abwasseraufbereitungsanlage (14) eine Wärmekraftmaschine, insbesondere ein Blockheizkraftwerk (27), nachgeordnet ist, die unter Verwendung von Biogas aus einer Biogasanlage elektrische Energie und/oder Wärmeenergie erzeugt.

13. Sudhausanlage nach einem der Ansprüche 1 bis 12,
**dadurch gekennzeichnet,**
**dass** der Feststoffverbrennungseinrichtung (01) eine Dampferzeugungseinrichtung (16) nachgeordnet ist, in der unter Verwendung der bei der Verbrennung der Filtrationspartikel entstehenden Rauchgase (09) Dampf erzeugt werden kann, wobei der in der Dampferzeugungseinrichtung (16) erzeugte Dampf in ein Dampfnetz (17) zur Dampfversorgung verschiedener Verbraucher in der Sudhausanlage (12, 35, 37) eingespeist wird, und wobei die thermische Vortrocknungseinrichtung (14) mit dem Dampf aus der Dampferzeugungseinrichtung (16), insbesondere vermittelt über das Dampfnetz (17), beheizt wird.

14. Verfahren zur thermischen Verwertung von feuchten Filtrationspartikeln, die in einer Sudhausanlage (12, 31, 35, 36, 37, 42) oder in einer sonstigen Alkoholgewinnungsanlage durch Trennen der Feststoffe der Maische von der flüssigen Phase erhalten werden, mit folgenden Verfahrensschritten:
a) Einförderung von Verbrennungsluft (05) in eine Feststoffverbrennungseinrichtung (01) unter Bildung einer stationären Luftströmungszone (06);
b) Einförderung der Filtrationspartikel in die turbulente Luftströmung der stationären Luftströmungszone (06);
c) Vermischung der Filtrationspartikel mit der Verbrennungsluft (05) unter Bildung einer stationären Luft-Partikel-Strömungzone;
d) Verbrennen der Filtrationspartikel durch thermische Reaktion in der Luft-Partikel-Strömungzone.

15. Verfahren nach Anspruch 14,
**dadurch gekennzeichnet,**
**dass** die Verbrennungsluft (05) von unten in die stationäre Luft-Partikel-Strömungzone nachgefördert wird und die Filtrationspartikel von oben in die stationäre Luft-Partikel-Strömungzone nachgefördert werden, wobei oberhalb der Luft-Partikel-Strömungzone zusätzliche (sekundäre) Verbrennungsluft (05) in die Feststoffverbrennungseinrichtung (01) zugeführt wird, wobei die sekundäre Verbrennungsluft (05) mit dem verbliebenen Restanteil an Filtrationspartikeln vermischt und verbrannt wird, wobei der Volumenanteil der sekundären Verbrennungsluft im Verhältnis zum Volumenanteil der primären Verbrennungsluft insbesondere im Bereich von 30% bis 70% liegt.
